# EUROPEAN PATENT APPLICATION

(11) **EP 4 195 129 A1**
(43) Date of publication of application: **14.06.2023**
(21) Application number: 22186581.9
(22) Date of filing: 22.07.2022
(51) Int. Cl.: G06Q 20/20, G06F 11/07

(54) **MANAGEMENT DEVICE AND INFORMATION PROCESSING METHOD**

(30) Priority: 09.12.2021 JP 2021200184
(71) Applicant: Toshiba Tec Kabushiki Kaisha, Shinagawa-ku Tokyo 141-8562 (JP)
(72) Inventor: Kamamoto, Shunichiro, Shinagawa-ku, Tokyo 141-8562 (JP)
(74) Representative: Bandpay & Greuter

(57) **Abstract**

A sales management device includes a communication interface configured to communicate with a plurality of point-of-sale (POS) terminals for performing checkout processing in a store and a peripheral device accessible from one or more of the POS terminals and performing a function related to the checkout processing, and a processor configured to in response to a first request from one of the POS terminals, grant an exclusive right to access the peripheral device, determine whether the peripheral device is in an error state, and upon determining that the peripheral device is in the error state, control the communication interface to transmit a notification to one or more POS terminals.

## Description

### FIELD

Embodiments described herein relate generally to a sales management device, a method performed by a sales management device, and a point-of-sale (POS) system.

### BACKGROUND

There are point-of-sale (POS) systems in which tablet terminals can be used for checkout instead of conventional POS terminals. In such POS systems, it has been considered to share various peripheral devices such as a printer for printing a receipt by granting a tablet terminal a right to access such peripheral devices through a management device. Generally, in such systems, a particular tablet terminal is granted exclusive right to use of a particular peripheral device. Such a sharing scheme has been widely considered in various processing systems where a plurality of processing terminals share a limited number of devices under the control of a management device.

In such processing systems, a processing terminal can confirm a state (status) of a shared device only after actually communicating with the device. In other words, it is impossible for the processing terminal to know the state of the shared device before obtaining permission to access the device. For this reason, it may be difficult for an operator of a processing terminal to timely notice and cope with the abnormality of the shared device.

Under the circumstances, it is desired that a state of a shared device can be timely and accurately known to a processing terminal.

### DISCLOSURE OF INVENTION

To solve the above problems, there is provided a sales management device comprising a communication interface configured to communicate with a plurality of point-of-sale (POS) terminals for performing checkout processing in a store and a peripheral device accessible from the plurality of POS terminals; and a processor configured to in response to a first request from one of the POS terminals, grant an exclusive right to access the peripheral device to the one of the POS terminals, determine whether the peripheral device is in an error state, and upon determining that the peripheral device is in the error state, control the communication interface to transmit a notification to one or more POS terminals.

In the sales management device, the notification may cause the one or more POS terminals to display information indicating that an error has occurred in the peripheral device.

The processor of the sales management device may be further configured to, in response to a second request from the one of the POS terminals, cancel the granted exclusive right.

The processor of the sales management device may be further configured to control the communication interface to transmit the notification to all of the POS terminals when no exclusive right has been granted to any of the POS terminals.

The sales management device may further comprise a memory that stores information representing the one or more of the POS terminals that can access the peripheral device, wherein the processor may be further configured to grant the exclusive right based on the information stored in the memory.

The processor of the sales management device may be further configured to control the communication interface to transmit the notification to the one or more of the POS terminals.

The processor of the sales management device may be further configured to control the communication interface to transmit the notification to the one of the POS terminals.

The processor of the sales management device may be further configured to, after transmitting the notification to the one of the POS terminals, determine whether the peripheral device is still in the error state, and upon determining that the peripheral device is still in the error state, control the communication interface to transmit the notification to another POS terminal.

In some embodiments of the sales management device, the peripheral device may be one of: a batch tag reader capable of reading a plurality of wireless tags at once, and a checkout terminal configured to perform online payment processing.

In some embodiments of the sales management device, each of the POS terminals may be installed in a corresponding one of checkout areas in the store, and the peripheral device may be outside of the checkout areas.

There is also provided a method performed by a sales management device configured to communicate with a plurality of point-of-sale (POS) terminals for performing checkout processing in a store and a peripheral device accessible from one or more of the POS terminals, the method comprising: in response to a first request from one of the POS terminals, granting an exclusive right to access the peripheral device to the one of the POS terminals; determining whether the peripheral device is in an error state; and after determining that the peripheral device is in the error state, transmitting a notification to one or more POS terminals.

In some embodiments of the method, the notification may cause the one or more POS terminals to display information indicating that an error has occurred in the peripheral device.

The method may further comprise: in response to a second request from one of the POS terminals, cancelling the granted exclusive right.

In some embodiments of the method, the notification may be transmitted to all of the POS terminals when no exclusive right is granted to any of the POS terminals.

The method may further comprise: storing information representing said one or more of the POS terminals that can access the peripheral device, wherein the exclusive right may be granted based on the information stored in the memory.

In some embodiments of the method, the notification may be transmitted to the one or more of the POS terminals.

In some embodiments of the method, the notification may be transmitted to one of the POS terminals.

The method may further comprise, after the notification is transmitted to the one of the POS terminals, determining whether the peripheral device is still in the error state; and after determining that the peripheral device is still in the error state, transmitting the notification to another POS terminal.

In some embodiments of the method, the peripheral device may be one of: a batch tag reader capable of a plurality of reading wireless tags at once, and a checkout terminal configured to perform online payment processing.

There is further provided a point of sale system , comprising a plurality of point-of-sale (POS) terminals for performing checkout processing in a store; a peripheral device accessible from one or more of the POS terminals and performing a function related to the checkout processing; and a sales management device including:
a communication interface configured to communicate with the POS terminals and the peripheral device, and a processor configured to: in response to a first request from one of the POS terminals, grant an exclusive right to access the peripheral device to the one of the POS terminals, determine whether the peripheral device is in an error state, and upon determining that the peripheral device is in the error state, control the communication interface to transmit a notification to one or more POS terminals, wherein the one or more POS terminals that have received the notification display information indicating that an error has occurred in the peripheral device.

### BRIEF DESCRIPTION OF THE DRAWINGS

FIG. 1 is a schematic block diagram illustrating a POS system according to an embodiment.
FIG. 2 is a hardware block diagram illustrating a management device according to an embodiment.
FIG. 3 depicts a data structure a setting table according to an embodiment.
FIG. 4 depicts a data structure of a management table according to an embodiment.
FIG. 5 is a flowchart of usage management processing performed by a management device according to an embodiment.
FIG. 6 is a flowchart of device management processing performed by a management device according to an embodiment.

### DETAILED DESCRIPTION

Exemplary embodiments provide a management device and an information processing method allowing a device state to be accurately known to a processing device.

In general, according to one embodiment, a sales management device includes a communication interface configured to communicate with a plurality of point-of-sale (POS) terminals for performing checkout processing in a store and a peripheral device accessible from one or more of the POS terminals and performing a function related to the checkout processing. The sales management device further includes a processor configured to, in response to a first request from one of the POS terminals, grant an exclusive right to access the peripheral device, determine whether the peripheral device is in an error state, and upon determining that the peripheral device is in the error state, control the communication interface to transmit a notification to one or more POS terminals.

Hereinafter, one or more embodiments will be described with reference to the drawings. In this disclosure, a POS system including a management device will be described as an example.

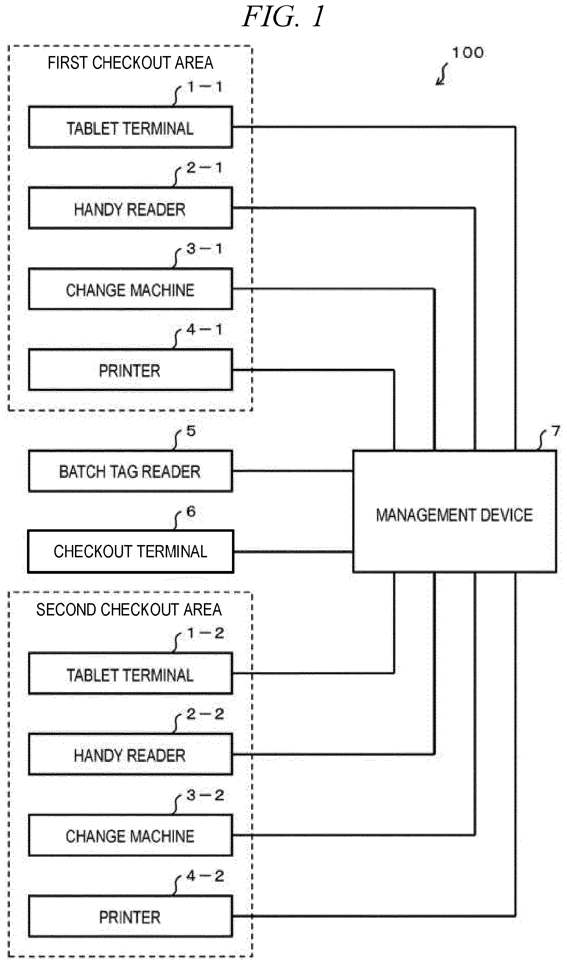

FIG. 1 is a schematic block diagram illustrating a POS system 100 according to an embodiment.

The POS system 100 includes tablet terminals 1-1 and 1-2, handy readers 2-1 and 2-2 (handheld readers), change machines 3-1 and 3-2, printers 4-1 and 4-2, a batch tag reader 5, a checkout terminal 6, and a sales management device 7 (hereinafter simply referred to as "management device 7").

The POS system 100 is installed in a store where products such as clothing are displayed and sold. The products on display have individually attached wireless tags (e.g., RFID tags) storing tag data including, for example, product codes for product identification. In the example shown in FIG. 1, a store has first and second checkout areas. The tablet terminal 1-1, the handy reader 2-1, the change machine 3-1, and the printer 4-1 are used at the first checkout area. The tablet terminal 1-2, the handy reader 2-2, the change machine 3-2, and the printer 4-2 are used at the second checkout area. The batch tag reader 5 and the checkout terminal 6 are shared between the first checkout area or the second checkout area. In the following description, the tablet terminals 1-1 and 1-2, the handy readers 2-1 and 2-2, the change machines 3-1 and 3-2, and the printers 4-1 and 4-2 will be simply described as a tablet terminal 1, a handy reader 2, a change machine 3, and a printer 4 if it is not necessary to distinguish whether the tablet terminals 1-1 and 1-2, the handy readers 2-1 and 2-2, the change machines 3-1 and 3-2, and the printers 4-1 and 4-2 are used at the first checkout area or the second checkout area.

The tablet terminal 1 is a tablet-type information processing terminal. In general, a conventional tablet-type computer terminal on which any application program can be installed and executed or the like can be used as the tablet terminal 1. In some examples, the tablet-type computer terminal may be a dedicated terminal rather than a standard terminal. The tablet terminal 1 executes information processing for transaction processing, such as product registration processing and post-registration payment amount calculation, in accordance with an installed application program for POS processing while appropriately communicating with the handy reader 2, the change machine 3, the printer 4, the batch tag reader 5, and the checkout terminal 6. In other words, the tablet terminal 1 is a processing terminal having the similar function as a known POS terminal, and the handy reader 2, the change machine 3, the printer 4, the batch tag reader 5, and the checkout terminal 6 are peripheral devices of the known POS terminal.

Three or more tablet terminals 1, three or more handy readers 2, three or more change machines 3, and three or more printers 4 may be provided in a store having three or more checkout areas. If the POS system 100 is installed in such a store having three or more checkout areas, any peripheral device such as the batch tag reader 5 may be shared among any number of checkout areas that are three or more. In addition, any peripheral device may be shared among a plurality of checkout areas. For example, one printer can be shared between the first checkout area and the second checkout area instead of the printers 4-1 and 4-2 installed at the respective checkout areas. In another example, a plurality of checkout terminals respectively dedicated to a plurality of checkout areas may be provided instead of the checkout terminal 6. In addition, some of the handy reader 2, the change machine 3, the printer 4, the batch tag reader 5, and the checkout terminal 6 may not be provided, peripheral devices other than the peripheral devices may be provided, or some of the peripheral devices may not be provided. In addition, combinations of peripheral devices may vary depending on checkout areas.

The handy reader 2 is operated by hand by an operator such as a clerk in a checkout area and reads tag data stored in a wireless tag attached to a product.

The change machine 3 stores coins (inserted from a coin slot or the like) in an internal storage. The coins are counted by the change machine 3 when inserted via the coin slot or the like. The change machine 3 discharges coins from storage to a coin tray via a coin outlet. The change machine 3 may also store bills (inserted via a bill slot or the like) in internal storage. In such cases, the change machine 3 counts the bills when inserted by the bill slot or the like. The change machine 3 discharges bills from storage via a bill outlet.

The printer 4 prints images on receipt paper to dispense receipts.

The batch tag reader 5 reads tag data stored in one or more wireless tags positioned in a predetermined reading space. If a plurality of wireless tags are positioned in the reading space, the batch tag reader 5 is capable of reading tag data from each of the plurality of wireless tags at once or substantially so.

The checkout terminal 6 performs processing for checkout using an online checkout service such as credit card checkout, electronic money checkout, debit card checkout, and barcode checkout.

The management device 7 is capable of data communication with each of the tablet terminal 1, the handy reader 2, the change machine 3, the printer 4, the batch tag reader 5, and the checkout terminal 6. The data communication may be performed by wire communication using, for example, a wired LAN or a universal serial bus (USB) or wireless communication using, for example, a wireless local area network (LAN) or Bluetooth (registered trademark). The management device 7 is an information processing device executing management processing (described later) for the tablet terminal 1 to use a peripheral device.

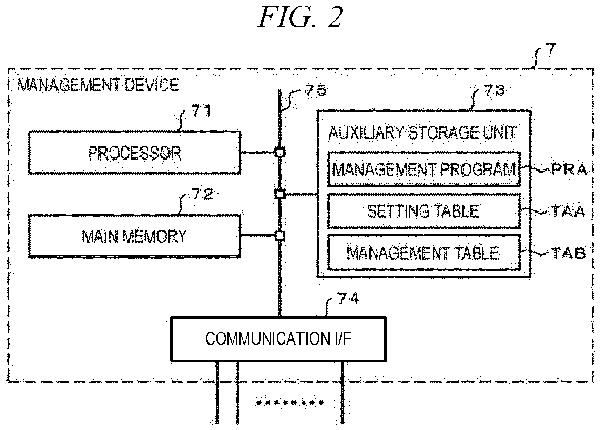

FIG. 2 is a hardware block diagram illustrating the management device 7.

The management device 7 includes a processor 71, a main memory 72, an auxiliary storage unit 73, a communication interface (I/F) 74, and a transmission line 75. The processor 71, the main memory 72, and the auxiliary storage unit 73 are connected by the transmission line 75.

The processor 71 executes information processing according to one or more programs such as an application program, middleware, and an operating system stored in the main memory 72 and the auxiliary storage unit 73. The processor 71 is, for example, a central processing unit (CPU).

The main memory 72 includes a non-volatile memory region and a volatile memory region. The main memory 72 stores one or more programs in the non-volatile memory region. In addition, the non-volatile or volatile memory region of the main memory 72 may store data necessary for the processor 71 to execute various types of information processing. The volatile memory region of the main memory 72 is used as a work area where data is temporarily stored by the processor 71.

The auxiliary storage unit 73 is a storage device such as an electric erasable programmable read-only memory (EEPROM), a hard disk drive (HDD), and a solid-state drive (SSD). The auxiliary storage unit 73 stores data used by the processor 71 for performing various types of information processing and data generated as a result of processing in the processor 71. In addition, the auxiliary storage unit 73 may store one or more programs. In the example shown in FIG. 2, the auxiliary storage unit 73 stores a management program PRA. The management program PRA is executed by the processor 71 for performing management processing. Specifically, the management processing manages access to a peripheral device by the tablet terminal 1. A part of the storage region of the auxiliary storage unit 73 is used to store data of a setting table TAA and a management table TAB.

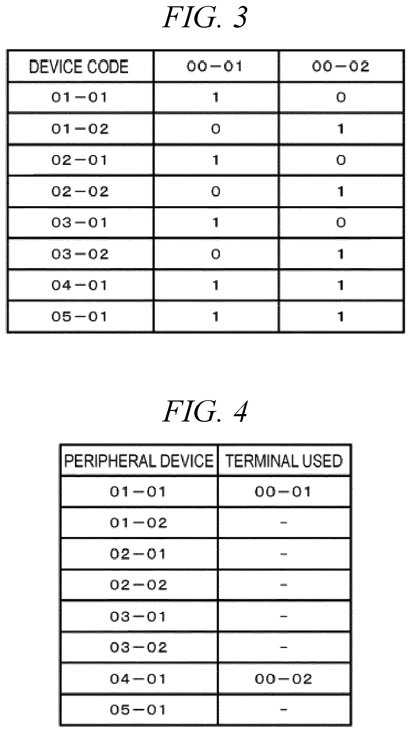

FIG. 3 depicts a data structure of the setting table TAA.

The setting table TAA represents which tablet terminal 1 is capable of using each peripheral device.

The setting table TAA is created in accordance with the configuration of the POS system 100 by another information processing device or the like, in accordance with an operation by a worker or the like during the initial configuration of the POS system 100 or the like and is written to the auxiliary storage unit 73. The setting table TAA shown in FIG. 3 is created so as to be adapted to the configuration illustrated in FIG. 1.

Device codes "00-01" and "00-02" represent the identifiers of the tablet terminals 1-1 and 1-2. Device codes "01-01" and "01-02" represent the identifiers of the handy readers 2-1 and 2-2. Device codes "02-01" and "02-02" represent the identifiers of the change machines 3-1 and 3-2. Device codes "03-01" and "03-02" represent the identifiers of the printers 4-1 and 4-2. Device code "04-01" represents the identifier of the batch tag reader 5. Device code "05-01" represents the identifier of the checkout terminal 6. As an example, "1" associated with the combination of device code "00-01" and device code "01-01" indicates that the handy reader 2-1 can be used by the tablet terminal 1-1. As another example, "0" associated with the combination of device code "00-02" and device code "01-01" indicates that the handy reader 2-1 cannot be used by the tablet terminal 1-2. The device codes such as "00-01" are mere examples, and other identifiers such as MAC addresses may be used to identify peripheral devices.

The setting table TAA is updated in accordance with an operation by a worker or the like if the configuration of the POS system 100 is changed. For example, if the configuration is changed such that any of the handy readers 2-1 and 2-2 may be used at either the first checkout area or the second checkout area, "0" associated with the combination of device code "00-02" and device code "01-01" may be rewritten to "1" and "0" associated with the combination of device code "00-01" and device code "01-02" may be rewritten to "1". For example, if the configuration is changed such that the checkout terminal 6 is dedicated to the first checkout area and the second checkout area is for cash checkout only, "1" associated with the combination of device code "00-02" and device code "05-01" may be rewritten to "0". In addition, if the configuration is changed such that a new batch tag reader 5 with device code "04-02" is additionally provided for the second checkout area and the existing batch tag reader 5 with device code "04-01" is dedicated to the first checkout area, the setting table TAA may be updated such that" 1" associated with the combination of device code "00-02" and device code "04-01" may be rewritten to "0", "0" may be newly written in associated with device code "00-01" and device code "04-02", and "1" may be newly written in associated with device code "00-02" and device code "04-02".

FIG. 4 depicts a data structure of the management table TAB.

The management table TAB represents which tablet terminal 1 currently has an exclusive right to access each peripheral device.

Represented in the example of FIG. 4 is a state where the exclusive right to access the peripheral device identified by device code "01-01", that is, the handy reader 2-1 is granted to the tablet terminal 1 identified by device code "00-01", that is, the tablet terminal 1-1. Represented in the example of FIG. 4 is a state where the exclusive right to access the peripheral device identified by device code "04-01", that is, the batch tag reader 5 is granted to the tablet terminal 1 identified by device code "00-02", that is, the tablet terminal 1-2. Represented in the example of FIG. 4 is a state where the exclusive rights to access the other peripheral devices are not granted to any tablet terminal 1.

Next, the operation of the POS system 100 configured as described above will be described focusing on the management processing performed by the management device 7. The steps described below is an example. It is possible to, for example, change the order of the steps in part, omit one or more steps in part, or perform one or more additional steps as appropriate.

If the POS system 100 should execute transaction processing, the processor 71 of the management device 7 executes usage management processing as a part of the management processing according to the management program PRA. The usage management processing is management processing for allowing a tablet terminal 1 to use a peripheral device.

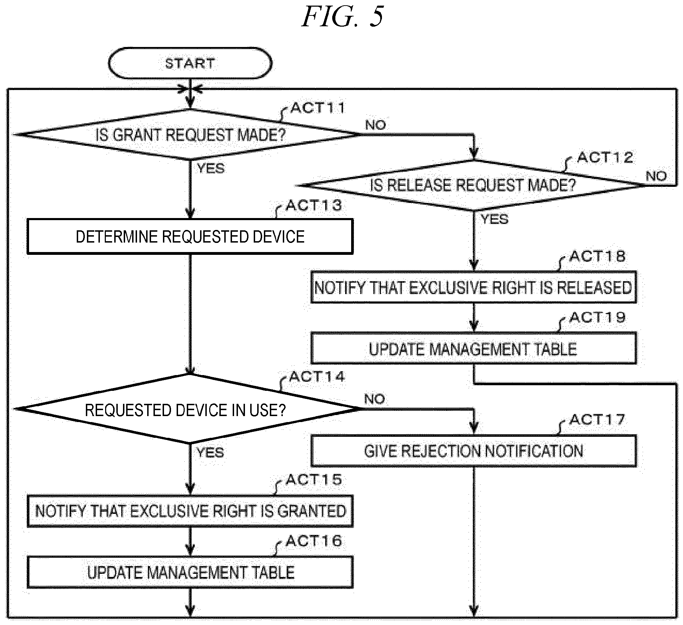

FIG. 5 is a flowchart of the usage management processing performed by the processor 71.

As ACT 11, the processor 71 confirms whether a grant request is made. If the corresponding event cannot be confirmed, the processor 71 determines NO and proceeds to ACT 12.

As ACT 12, the processor 71 confirms whether a release or cancel request is made. If the corresponding event cannot be confirmed, the processor 71 determines NO and returns to ACT 11.

In this manner, the processor 71 waits for the grant request or the release request as ACT 11 and ACT 12.

If it is necessary to use a peripheral device in executing transaction processing, the tablet terminal 1 requests the management device 7 to grant an exclusive right to access the peripheral device. For example, in a situation in which transaction registration using the handy reader 2 should be started, the tablet terminal 1 transmits, to the management device 7, predetermined request data for requesting the management device 7 to grant an exclusive right to access the handy reader 2. If this request data is received by the communication interface 74, the processor 71 determines YES in ACT 11 and proceeds to ACT 13.

As ACT 13, the processor 71 determines a peripheral device allowed to be used by the requesting tablet terminal 1. For example, if the exclusive right to access the handy reader 2 is requested by the tablet terminal 1-2, the processor 71 identifies the handy reader 2-2 with device code "01-02" based on the setting table TAA.

As ACT 14, the processor 71 confirms whether the identified device is not being used by another terminal. The processor 71 determines YES and proceeds to ACT 15 if, for example, no device code is described in the management table TAB in association with the device code of the identified device.

As ACT 15, the processor 71 notifies the requesting tablet terminal 1 that the exclusive right to access the requested device is granted. The above grant request and the notification here are transmitted using, for example, the Hypertext Transfer Protocol (HTTP). In other words, the processor 71 issues the notification here as, for example, a response to the grant request.

With the grant notification received, the tablet terminal 1 is capable of accessing the requested peripheral device and using the function(s) of the peripheral device. For example, with an exclusive right to access the handy reader 2-2 granted, the tablet terminal 1-2 is capable of acquiring tag data read by the handy reader 2-2 from the handy reader 2-2 and registering the product code in the tag data.

If it is necessary to perform a cash checkout, the tablet terminal 1 uses the function of the change machine 3 after an exclusive right to access the change machine 3 is granted from the management device 7. If it is necessary to print a receipt or the like, the tablet terminal 1 uses the function of the printer 4 after an exclusive right to access the printer 4 is granted from the management device 7. If it is necessary to collectively read tag data on a plurality of products in a basket or the like, the tablet terminal 1 uses the function of the batch tag reader 5 after an exclusive right to access the batch tag reader 5 is granted from the management device 7. If it is necessary to perform checkout using an online checkout service, the tablet terminal 1 uses the function of the checkout terminal 6 after an exclusive right to access the checkout terminal 6 is granted from the management device 7.

In ACT 16, the processor 71 updates the management table TAB so as to reflect the current exclusive right grant. For example, the processor 71 updates the management table TAB in association with the device code of the requested device so as to represent the device code of the tablet terminal 1 to which the exclusive right to access the requested device is granted.

Then, the processor 71 returns to the standby state of ACT 11 and ACT 12.

If it is confirmed that a device code is already described in the management table TAB in association with the device code of the requested device, the processor 71 determines NO in ACT 14 and proceeds to ACT 17. If, for example, granting an exclusive right to access the batch tag reader 5 is requested from the tablet terminal 1-1 in a case where the management table TAB is as illustrated in FIG. 4, the processor 71 determines NO in ACT 14 since a device code is already described in the management table TAB in association with device code "04-01" of the batch tag reader 5.

As ACT 17, the processor 71 notifies the requesting tablet terminal 1 that the grant request is rejected. Then, the processor 71 returns to the standby state of ACT 11 and ACT 12. In this manner, the processor 71 does not simultaneously grant an exclusive right to both the tablet terminal 1-1 and the tablet terminal 1-2 with respect to a peripheral device that can otherwise be shared by the tablet terminals 1-1 and 1-2.

Once the tablet terminal 1 has completed the use of the requested peripheral device, the tablet terminal 1 transmits predetermined request data for requesting the management device 7 to release the exclusive right to the management device 7. If this request data is received by the communication interface 74, the processor 71 determines YES in ACT 12 and proceeds to ACT 18.

As ACT 18, the processor 71 notifies the requesting tablet terminal 1 of the release of the exclusive right.

As ACT 19, the processor 71 updates the management table TAB so as to reflect the current release of the exclusive right. For example, the processor 71 deletes the device code of the requesting tablet terminal 1 from the management table TAB.

Then, the processor 71 returns to the standby state of ACT 11 and ACT 12.

As described above, the tablet terminal 1 is capable of executing transaction processing using a peripheral device under the management of the management device 7 by the usage management processing performed by the processor 71.

The processor 71 starts device management processing as a part of the management processing according to the management program PRA at predetermined check timings. The device management processing allows a tablet terminal 1 to use a peripheral device. The device management processing is performed at regular time intervals. The timing may be freely determined by, for example, the manufacturer or administrator of the management device 7. The processor 71 executes this device management processing as, for example, processing separate in thread from the usage management processing.

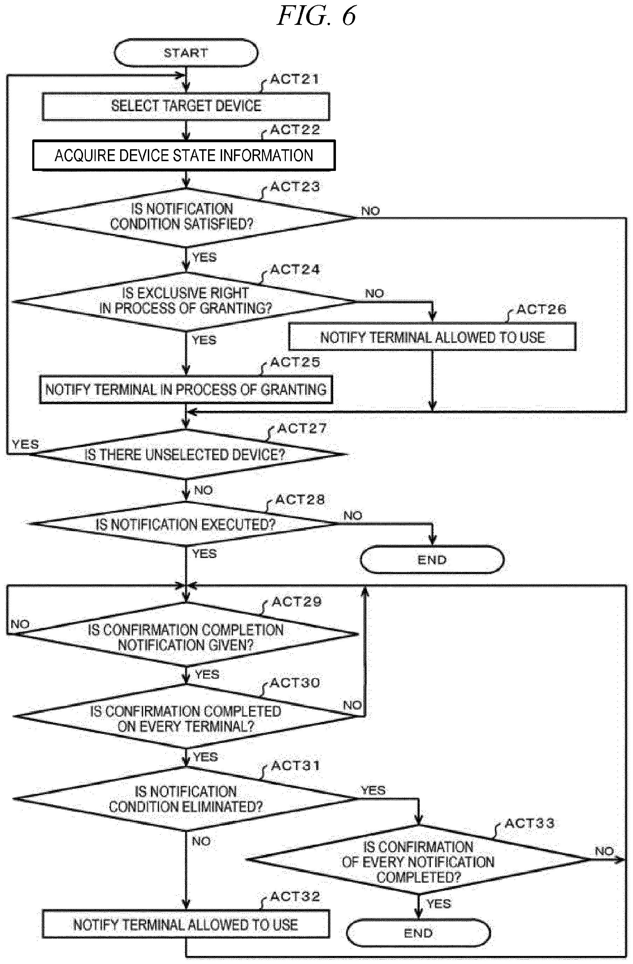

FIG. 6 is a flowchart of the device management processing performed by the processor 71.

As ACT 21, the processor 71 selects one target device out of all the peripheral devices in the POS system 100. Alternatively, a target device may be selected out of some peripheral devices predetermined as monitoring targets among all the peripheral devices in the POS system 100.

As ACT 22, the processor 71 acquires device state information representing the device state of the target device. The device state information indicates, for example, an occurrence or non-occurrence of an error. The device state information may represent any device state, which may be determined by the manufacturer of the management device 7, for example. In addition, the device state to be monitored may vary depending on the type of the target device.

As ACT 23, the processor 71 determines whether a predetermined notification condition is satisfied with regard to the device state information acquired in ACT 22. For example, the notification condition is satisfied when an error has occurred in the target device. Any type of notification condition may be determined by, for example, the manufacturer of the management device 7. In addition, individual notification conditions may be determined in accordance with the types of target devices. For example, if the target device is the printer 4, the notification condition is satisfied when the printer 4 has run out of print paper. If it is determined that the notification condition is satisfied, the processor 71 determines YES and proceeds to ACT 24.

As ACT 24, the processor 71 determines whether an exclusive right to access the target device is granted. The processor 71 determines YES and proceeds to ACT 25 if, for example, it is determined that the device code of the tablet terminal 1 is described in the management table TAB in association with the device code of the target device.

As ACT 25, the processor 71 notifies the tablet terminal 1 to which the exclusive right of the target device is granted that the notification condition is satisfied in relation to the target device. In other words, if, for example, the printer 4-1 has run out of print paper and an exclusive right to access the printer 4-1 is granted to the tablet terminal 1-1, the processor 71 notifies the tablet terminal 1-1 that the notification condition is satisfied so that the tablet terminal 1-1 displays a screen or a message indicating that the error has occurred in the peripheral device (i.e., the printer 4-1 has run out of print paper).

On the other hand, when the processor 71 determines that an exclusive right to access the target device is not granted, i.e., when no device code is described in the management table TAB in association with the device code of the target device, the processor 71 determines NO in ACT 24, and proceeds to ACT 26.

As ACT 26, the processor 71 notifies one or more tablet terminals 1 allowed to use the target device that the notification condition is satisfied in relation to the target device. For example, if the printer 4-1 has run out of print paper and an exclusive right to access the printer 4-1 not granted to any tablet terminal 1, the processor 71 notifies the tablet terminal 1-1 that the notification condition is satisfied. In addition, for example, if a network communication abnormality has occurred in the checkout terminal 6 and an exclusive right to access the checkout terminal 6 is not granted to any tablet terminal 1, the processor 71 notifies both the tablet terminal 1-1 and the tablet terminal 1-2 that the notification condition is satisfied.

For example, the Message Queuing Telemetry Transport (MQTT) protocol or the like can be used for the notification from the management device 7 to the tablet terminal 1. In such a case, the management device 7 is an MQTT broker and an MQTTP publisher. As an example, the tablet terminal 1-1 subscribes, with respect to the management device 7, a first topic predetermined for notification with respect to the tablet terminal 1-1 and a second topic predetermined for notification with respect to a plurality of the tablet terminals 1. As another example, the tablet terminal 1-2 subscribes, with respect to the management device 7, the second topic and a third topic predetermined for notification with respect to the single tablet terminal 1-2. As a result, both the tablet terminal 1-1 and the tablet terminal 1-2 become MQTT subscribers. Then, in ACT 25, the processor 71 in the management device 7 distributes notification data predetermined for the notification in ACT 25 in relation to the first topic if the notification destination is the tablet terminal 1-1 and the third topic if the notification destination is the tablet terminal 1-2. In addition, in ACT 26, the processor 71 distributes notification data predetermined for the notification in ACT 26 in relation to the second topic.

The tablet terminal 1 performs a predetermined operation with the notification in ACT 25 or ACT 26 received. The operation of the tablet terminal 1 at this time may be appropriately determined. For example, the tablet terminal 1 displays a predetermined alarm screen on its display device and then waits for an operation for confirmation by the operator. If such an operation is performed, the tablet terminal 1 notifies the management device 7 of the completion of the confirmation.

The processor 71 proceeds to ACT 27 with the notification in ACT 25 finished. The processor 71 proceeds to ACT 27 with the notification in ACT 26 finished. In addition, if the processor 71 determines NO in ACT 23, i.e., the notification condition is not satisfied, the processor 71 passes both ACT 25 and ACT 26 and proceeds to ACT 27 without notifying the tablet terminal 1.

As ACT 27, the processor 71 determines whether there is an unselected peripheral device as a target device among the peripheral devices. Then, the processor 71 determines YES and repeats the processing of ACT 21 and subsequent ACTs in the same manner as described above if there is an unselected peripheral device. If the processor 71 executes ACT 21 for the second time or later, the processor 71 selects a peripheral device yet to be selected as a target device in ACT 21. If the processor 71 proceeds to ACT 27 in a state where all the peripheral devices to be selected as target devices have been selected, the processor 71 determines that there is no unselected peripheral device, and proceeds to ACT 28.

As ACT 28, the processor 71 determines whether the notification in ACT 25 or ACT 26 has been executed at least once in the processing loop of ACT 21 to ACT 27. If the notification condition is not satisfied in relation to any of the peripheral devices to be selected as target devices and the notification in ACT 25 or ACT 26 is never executed, the processor 71 determines NO and ends the device management processing as it is.

If the notification in ACT 25 or ACT 26 has been executed at least once, the processor 71 determines YES in ACT 28 and proceeds to ACT 29.

As ACT 29, the processor 71 waits for the notification of notification-related confirmation completion from the tablet terminal 1 that is the notification destination in ACT 25 or ACT 26. If the confirmation completion notification from the tablet terminal 1 is received, the processor 71 determines YES and proceeds to ACT 30.

As ACT 30, the processor 71 determines whether the confirmation on all the tablet terminals 1 as notification targets at the same timing is completed by the confirmation completion notification confirmed as described above. For example, for the confirmation here, the processor 71 stores, for example, history data representing the notification condition satisfied as a notification trigger and the device code of the tablet terminal 1 as a notification destination in association with each other in the main memory 72 or the auxiliary storage unit 73 if the notification in ACT 25 or ACT 26 is executed. Then, if the confirmation on all the corresponding tablet terminals 1 is not completed, the processor 71 determines NO and returns to the standby state of ACT 29. If the confirmation on all the corresponding tablet terminals 1 is completed, the processor 71 determines YES in ACT 30 and proceeds to ACT 31.

As ACT 31, the processor 71 determines whether the notification condition that is the cause of the notification that the confirmation on all the tablet terminals 1 is completed as described above, is eliminated. Then, if the corresponding notification condition is still satisfied, the processor 71 determines NO and proceeds to ACT 32.

As ACT 32, the processor 71 notifies the tablet terminal 1 allowed to use the peripheral device related to the notification condition determined in ACT 31 as still satisfied that the notification condition is satisfied. In other words, if the confirmation on one tablet terminal 1 as the notification destination of the notification given in ACT 25 is completed and yet the corresponding notification condition is still satisfied, the processor 71 notifies the tablet terminal 1, again. In addition, if there is another tablet terminal 1 allowed to use the peripheral device related to the notification condition, the processor 71 notifies the other tablet terminal 1 as well. For example, if the confirmation is completed on the tablet terminal 1-1 after the notification in ACT 25 is given to the tablet terminal 1-1 in response to the notification condition being satisfied in relation to the checkout terminal 6 with the exclusive right to access the checkout terminal 6 granted to the tablet terminal 1-1, notification to the tablet terminal 1-2 is given in addition to the tablet terminal 1-1 being notified again in ACT 32. Then, the processor 71 returns to the standby state of ACT 29.

The processor 71 proceeds to ACT 33 if the processor 71 determines YES in ACT 31 for the corresponding notification condition being eliminated.

As ACT 33, the processor 71 determines whether the confirmation related to every notification given in the current device management processing is completed. The processor 71 determines NO and returns to the standby state of ACT 29 if there remains a notification with an uncompleted confirmation. If the confirmation related to every notification given in the current device management processing is completed, the processor 71 determines YES in ACT 33 and ends the device management processing.

As described above, in the POS system 100, the tablet terminal 1-1 and the tablet terminal 1-2 share one batch tag reader 5 or one checkout terminal 6 and each perform checkout processing. In other words, the POS system 100 corresponds to a processing system in which each of the tablet terminal 1-1 and the tablet terminal 1-2 as processing terminals performs predetermined information processing using the batch tag reader 5 or the checkout terminal 6 as a shared device. The processor 71 in the management device 7 grants an exclusive right to access the batch tag reader 5 or the checkout terminal 6 to either the tablet terminal 1-1 or the tablet terminal 1-2. In addition, the processor 71 notifies both the tablet terminal 1-1 and the tablet terminal 1-2 that a notification condition is satisfied in relation to the device state of the batch tag reader 5 or the checkout terminal 6.

If a peripheral device shared by a plurality of tablet terminals 1 reaches a notification-required state as described above, the management device 7 notifies each of the tablet terminals 1 of the state being reached. Accordingly, it is possible for each tablet terminal 1 to timely and accurately know the device state of each peripheral device even when the peripheral device is not been used by any tablet terminal 1.

The management device 7 notifies all the tablet terminals 1 if an exclusive right to access a peripheral device in a notification-required state is not granted to any of the tablet terminals 1. On the other hand, if the exclusive right is granted to any of the tablet terminals 1, the management device 7 notifies only the tablet terminal 1 to which the exclusive right is granted. As a result, if the peripheral device in the notification-required state is being used by a tablet terminal 1, only that tablet terminal 1 is notified. Accordingly, it is possible for a tablet terminal 1 using a peripheral device to timely and accurately know the occurrence of an error in the peripheral device.

The management device 7 gives notification related to a peripheral device only to a tablet terminal 1 allowed to use the peripheral device, that is, the tablet terminal 1 to which an exclusive right to access the peripheral device may be granted. As a result, a tablet terminal 1 that may not use the peripheral device is not notified and the operator of the tablet terminal 1, that is, the operator that does not use the peripheral device is not bothered by the notification related to the peripheral device.

If an exclusive right to access a peripheral device related to notification is granted to any tablet terminal 1, the management device 7 notifies only the tablet terminal 1. The operator of the tablet terminal 1 is in the process of using the notification-related peripheral device. Accordingly, in many cases, the operator takes prompt action against an error occurring in the peripheral device. Since the degree of importance of notification to the other tablet terminals 1 is low, such notification is not given, and the operators of the other tablet terminals 1 are not bothered by notification.

If notification confirmation is completed on every notification destination tablet terminal 1 and yet the notification condition is still satisfied, the management device 7 re-notifies every tablet terminal 1 to which an exclusive right to access the peripheral device may be granted. As a result, if a peripheral device is shared by a plurality of tablet terminals 1 and one tablet terminal 1 is initially notified in ACT 25 in FIG. 6, the other tablet terminals 1 are notified. As a result, if the operator of the initially-notified tablet terminal 1 cannot properly cope with a notification-related error, the operators of the other tablet terminals 1 can cope with the error in response to the notifications to the other tablet terminals 1.

The examples described above can be variously modified as follows.

Notification related to a peripheral device may be given to every tablet terminal 1 regardless of whether an exclusive right to access the peripheral device may be granted. In such a case, it is also possible for another operator to take prompt action to solve an error occurring in the peripheral device if all the operators of tablet terminals 1 to which an exclusive right to access the peripheral device may be granted cannot take action to solve the error.

The processor 71 may issue the notification in ACT 32 in FIG. 6 to the tablet terminal 1 not allowed to use a peripheral device related to the notification condition determined to be still satisfied in addition to or instead of the tablet terminal 1 allowed to use the peripheral device. For example, the processor 71 may regard every tablet terminal 1 in the POS system 100 as the notification destination in ACT 32. In such a case, the operator of another tablet terminal 1 can take prompt action if, for example, the operator of the tablet terminal 1 that is the notification destination in ACT 25 or ACT 26 cannot take any action to solver the error.

What is executed on the tablet terminal 1 is not limited to checkout processing. Any information processing may be executed by the tablet terminal 1 insofar as the processing needs the use of a shared peripheral device. Accordingly, the processing system to be managed by the management device 7 is not limited to the POS system 100.

Various types of information processing devices instead of the tablet terminal 1 may be used as the processing device, examples of which include a smaller information processing terminal and a stationary computer device.

Each of the tablet terminals 1-1 and 1-2, the handy readers 2-1 and 2-2, the change machines 3-1 and 3-2, the printers 4-1 and 4-2, the batch tag reader 5, the checkout terminal 6, and the management device 7 may be connected to a communication network such as a LAN such that communication between the tablet terminals 1-1 and 1-2, the handy readers 2-1 and 2-2, the change machines 3-1 and 3-2, the printers 4-1 and 4-2, the batch tag reader 5, and the checkout terminal 6 may be performed without going through the management device 7.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

## Claims

1. A sales management device (7), comprising:
a communication interface (74) configured to communicate with a plurality of point-of-sale (POS) terminals for performing checkout processing in a store and a peripheral device accessible from the plurality of POS terminals; and
a processor (71) configured to
in response to a first request from one of the POS terminals, grant an exclusive right to access the peripheral device to the one of the POS terminals,
determine whether the peripheral device is in an error state, and
upon determining that the peripheral device is in the error state, control the communication interface (74) to transmit a notification to one or more POS terminals.

2. The sales management device (7) according to claim 1, wherein the notification causes the one or more POS terminals to display information indicating that an error has occurred in the peripheral device.

3. The sales management device (7) according to claim 1 or 2, wherein the processor (71) is further configured to, in response to a second request from the one of the POS terminals, cancel the granted exclusive right.

4. The sales management device (7) according to any one of claims 1 to 3, wherein the processor (71) is further configured to control the communication interface (74) to transmit the notification to all of the POS terminals when no exclusive right has been granted to any of the POS terminals.

5. The sales management device (7) according to any one of claims 1 to 4, further comprising:
a memory that stores information representing the one or more POS terminals that can access the peripheral device, wherein
the processor (71) is further configured to grant the exclusive right based on the information stored in the memory.

6. The sales management device according to any one of claims 1 to 5, wherein the processor is further configured to control the communication interface to transmit the notification to the one or more of the POS terminals.

7. The sales management device (7) according to any one of claims 1 to 6, wherein the processor (71) is further configured to control the communication interface to transmit the notification to the one of the POS terminals.

8. The sales management device according to claim 7, wherein the processor is further configured to, after transmitting the notification to the one of the POS terminals:
determine whether the peripheral device is still in the error state, and
upon determining that the peripheral device is still in the error state, control the communication interface to transmit the notification to another POS terminal.

9. The sales management device (7) according to any one of claims 1 to 8, wherein the peripheral device is one of:
a batch tag reader capable of reading a plurality of wireless tags at once, and
a checkout terminal configured to perform online payment processing.

10. The sales management device according to any one of claims 1 to 9, wherein each of the POS terminals is installed in a corresponding one of checkout areas in the store, and the peripheral device is outside of the checkout areas.

11. A method performed by a sales management device (7) configured to communicate with a plurality of point-of-sale (POS) terminals for performing checkout processing in a store and a peripheral device accessible from one or more of the POS terminals, the method comprising:
in response to a first request from one of the POS terminals, granting an exclusive right to access the peripheral device to the one of the POS terminals;
determining whether the peripheral device is in an error state; and
after determining that the peripheral device is in the error state, transmitting a notification to one or more POS terminals.

12. The method according to claim 11, wherein the notification causes the one or more POS terminals to display information indicating that an error has occurred in the peripheral device.

13. The method according to claim 11 or 12, further comprising:
in response to a second request from one of the POS terminals, cancelling the granted exclusive right.

14. The method according to any one of claims 11 to 13, wherein the notification is transmitted to all of the POS terminals when no exclusive right is granted to any of the POS terminals.

15. A point-of-sale (POS) system, comprising:
a plurality of point-of-sale (POS) terminals for performing checkout processing in a store;
a peripheral device accessible from one or more of the POS terminals and performing a function related to the checkout processing; and
a sales management device (7) including:
a communication interface configured to communicate with the POS terminals and the peripheral device, and
a processor (71) configured to:
in response to a first request from one of the POS terminals, grant an exclusive right to access the peripheral device to the one of the POS terminals,
determine whether the peripheral device is in an error state, and
upon determining that the peripheral device is in the error state, control the communication interface to transmit a notification to one or more POS terminals, wherein
the one or more POS terminals that have received the notification display information indicating that an error has occurred in the peripheral device.
